# EUROPEAN PATENT SPECIFICATION

(11) **EP 3 822 897 B1**
(45) Date of publication and mention of the grant of the patent: **13.08.2025**
(21) Application number: 20207146.0
(22) Date of filing: 12.11.2020
(51) Int. Cl.: G06Q 30/018, G06F 16/27, H04L 9/08, H04L 9/06, G06F 21/44, G06F 21/60

(54) **GENERATING AND STORING UNIQUE MARKING CODES FOR LIQUID FOOD PACKAGES**
ERZEUGUNG UND SPEICHERUNG EINZIGARTIGER MARKIERUNGSCODES FÜR FLÜSSIGLEBENSMITTELVERPACKUNGEN
GÉNÉRATION ET STOCKAGE DE CODES DE MARQUAGE UNIQUES POUR DES EMBALLAGES DE PRODUITS ALIMENTAIRES LIQUIDES

(30) Priority: 14.11.2019 EP 19209109
(43) Date of publication of application: 19.05.2021
(73) Proprietor: Tetra Laval Holdings & Finance S.A., 1009 Pully (CH)
(72) Inventor: GAZZADI POGGIOLI, Matteo, 41121 Modena (IT); NAIK, Gaurav, 670472 Singapore (SG); ROBERTI, Biagio, 20135 Milano (IT); OCCHIOGROSSO, Gregorio, Bitetto (Bari) (IT)
(74) Representative: Tetra Pak Patent Attorneys

(56) References cited:
- EP-A1- 3 540 664
- JP-A- 2015 088 109
- US-A1- 2016 203 175
- DRAGON119: "Data partitioning guidance - Best practices for cloud applications | Microsoft Docs", 10 January 2019 (2019-01-10), XP055693793, Retrieved from the Internet <URL:https://web.archive.org/web/20190110124904/https://docs.microsoft.com/en-us/azure/architecture/best-practices/data-partitioning> [retrieved on 20200511]

## Description

### Technical Field

The present disclosure generally relates to manufacture of packages for liquid food and, in particular, to generating and storing unique marking codes for such packages.

### Background Art

Every day across the world, billions of litres of water, milk, juice and other liquid foods are consumed. A large proportion of the liquid food is distributed in paper-based packages, also known as carton packages. These packages are produced to protect both the nutritional value and the taste of the liquid food inside. The underlying technology greatly facilitates packaging and distribution of liquid food products across the world.

The present Applicant has identified a need to mark each package with a unique code. The provision of a unique code on each package enables various functionality, such as tracking and tracing the packages throughout the manufacturing and distribution chain, verifying the authenticity of the package, linking to web content related to the package for access by consumers or retail personnel, associating the codes with promotional campaigns and lotteries, causing manufacturing machines to perform automated actions upon detecting the code, etc.

EP3540664 discloses a robust technique for providing marking codes for packages containing liquid food, where the respective marking code uniquely identifies an individual package. The marking code is based on payload data, which uniquely represents the production of the individual package and may be indicative of the time and/or the location of the production. The payload data is encrypted to make it difficult to guess valid codes and generate fraudulent codes. The marking code is formed by combining the encrypted payload data with a non-encrypted header portion. The marking codes are provided on the packages and are also entered in a database, optionally in association with additional data. To enable efficient and fast search in the database, EP3540664 proposes to partition the database based on the time and/or location as indicated by the payload portion, and store the respective marking code in the database partition that matches the time and/or location in the marking code.

Packages for liquid food are produced on an industrial scale for the world market. Huge numbers of packages are produced each year. For example, within the ecosystem of Tetra Pak^{®}, 188 billion (10⁹) packages were produced in 2016. Considering that packaged products may have a shelf life of 6 months to 1 year, or even longer, for example up to 5 years, a huge number of unique marking codes need to be produced and stored in the database. The deployment of the marking codes in such an environment is likely to result in data in excess of 1 PB. This amount of data is difficult to store and manage in a unitary database.

It is thus a challenge to store these and other types of marking codes for packages of liquid food, provided in huge numbers, in a database without excessive resource consumption while enabling fast and efficient storage and search in the database.

### Summary

It is an objective to at least partly overcome one or more limitations of the prior art.

A further objective is to enable fast and efficient storage and search in a database containing package-related data for individual packages of liquid food.

Another objective is to enable a database which is scalable and enables a storage capacity of package-related data of more than 1 PB.

One or more of these objectives, as well as further objectives that may appear from the description below, are at least partly achieved by a method of generating marking codes, a computer-readable medium, and a system for generating marking codes according to the independent claims, embodiments thereof being defined by the dependent claims.

A first aspect of the present disclosure is a method of generating marking codes to uniquely identify packages for liquid food. The method comprises: obtaining package production data which is unique to each individual package; operating a predefined encryption algorithm on the package production data to generate encrypted package production data; generating a marking code that includes the encrypted package production data; providing the marking code for marking of the individual package; and storing, in a database that comprises a plurality of partitions, package itemization data comprising at least a subset of the marking code and at least a subset of the package production data of the individual package. The storing comprises generating a partition key as a function of the marking code, and operating a controller coupled to the database to determine a selected partition among the plurality of partitions based on the partition key and to store the package itemization data in the selected partition, wherein the partition key equals to the marking code, or the partition key equals the encrypted package production data of the marking code.

In some embodiments, operating the controller comprises operating a predefined mapping function on the partition key, the predefined mapping function being configured to map partition keys to a set of partition identifiers, which comprises a respective partition identifier for each partition among the plurality of partitions, wherein the selected partition is determined based on a current partition identifier generated by the mapping function for the partition key.

In some embodiments, the predefined mapping function comprises a hash function.

In some embodiments, the predefined encryption algorithm is a block cipher.

In some embodiments, the package production data is obtained to represent at least one of a location and a time of producing the individual package.

In some embodiments, the at least a subset of the marking code comprises the encrypted package production data.

In some embodiments, the database is a distributed database.

A second aspect of the present disclosure is a computer-readable medium comprising computer instructions which, when executed by a processor, cause the processor to perform the method of the first aspect or any embodiment thereof.

A third aspect of the present disclosure is a system for generating marking codes to uniquely identify packages for liquid food. The system comprises a code generator configured to operate a predefined encryption algorithm on package production data, which is unique to each individual package, to generate encrypted package production data. The code generator is further configured to generate a marking code that includes the encrypted package production data and to provide the marking code for marking of the individual package. The system further comprises a storage interface coupled to a database that comprises a plurality of partitions. The storage interface is arranged to receive package itemization data comprising at least a subset of the marking code and at least a subset of the package production data of the individual package. The system further comprises a key generator configured to generate a partition key as a function of the marking code and provide the partition key to the storage interface. The storage interface is configured to, upon receipt of the partition key, determine a selected partition among the plurality of partitions based on the partition key and to store the package itemization data in the selected partition, wherein the partition key equals to the marking code, or the partition key equals the encrypted package production data of the marking code.

Any one of the embodiments of the first aspect may be adapted and implemented as an embodiment of the third aspect.

Still other objectives, as well as embodiments, features, aspects and advantages will appear from the following detailed description as well as from the drawings.

### Brief Description of the Drawings

Embodiments will now be described, by way of example, with reference to the accompanying schematic drawings.
FIG. 1A is an overview of a manufacturing and distribution chain for packages for liquid food, and FIG. 1B is a schematic illustration of such a package.
FIG. 2 is a block diagram of an example system for marking packages with unique codes.
FIGS 3A-3B are plots of data partitioning in a distributed database, produced based on a partition key representing production location and for 5 000 and 30 000 logical partitions, respectively.
FIG. 4 is a block diagram of a system for marking packages with unique codes in accordance with embodiments.
FIGS 5A-5D are plots of data partitioning in a distributed database, produced based on a partition key representing the unique code and for 1 000 and 30 000 logical partitions, respectively.
FIG. 6 is a flow cart of a marking method in accordance with embodiments.
FIG. 7 is a block diagram of a machine that may implement the marking method of FIG. 6.

### Detailed Description

Embodiments will now be described more fully hereinafter with reference to the accompanying drawings, in which some, but not all, embodiments are shown. Indeed, the invention may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments. As used herein, the term "and/or" comprises any and all combinations of one or more of the associated listed items.

As used herein, "liquid food" refers to any food product that is non-solid, semiliquid or pourable at room temperature, including beverages, such as fruit juices, wines, beers, sodas, as well as dairy products, sauces, oils, creams, custards, soups, pastes, etc, and also solid food products in a liquid, such as beans, fruits, tomatoes, stews, etc.

As used herein, "a package" refers to any package or container suitable for sealed containment of liquid food products, including but not limited to containers formed of cardboard or packaging laminate, e.g. cellulose-based material, and containers made of or comprising plastic material.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

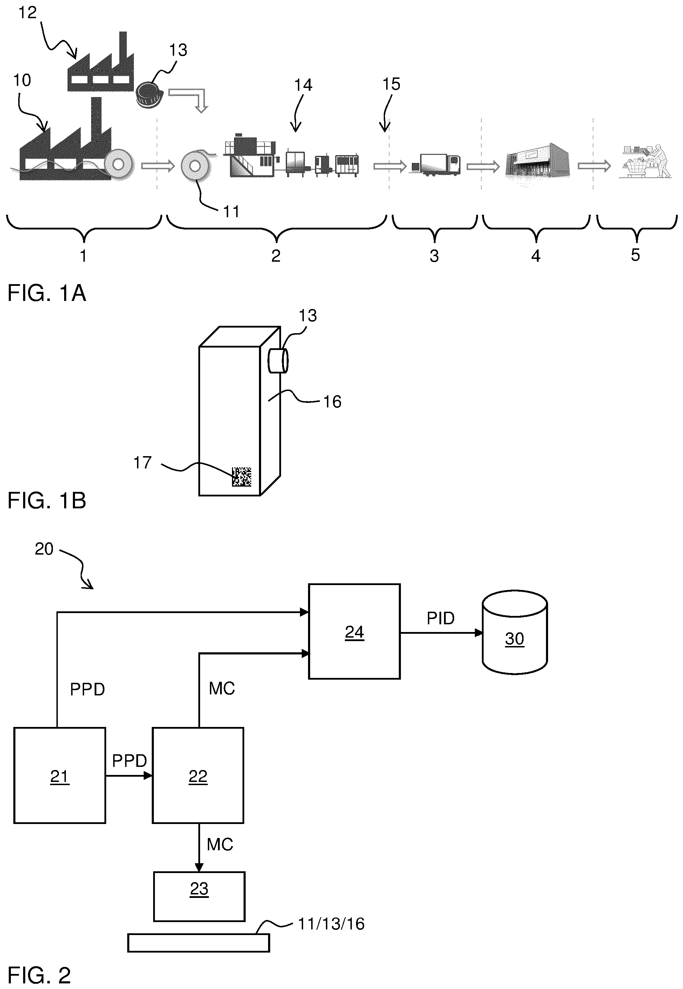

FIG. 1A is a schematic illustration of a manufacturing and distribution chain for packages for liquid food. The illustrated chain comprises a manufacturing stage 1 for manufacturing raw material for the packages, a filling stage 2 for manufacturing packages containing liquid food, a distribution stage 3 for distributing the packages containing liquid food, a retail stage 4 for providing the packages to consumers, and a consumer stage 5 in which the packages are handled by a consumer and the liquid food is consumed.

In the manufacturing stage 1, a sheet material for the packages is manufactured at a converting factory (plant) 10. The sheet material is typically paper-based and provided to the filling stage 2 in rolls 11. In the illustrated example, stage 1 further involves a dedicated factory (plant) 12 that manufactures caps 13 for the packages, typically of plastic material. If the packages are formed without a cap, the factory 12 is absent from stage 1. It is also conceivable that stage 1 includes additional factories that manufacture specific components for the package.

In the filling stage 2, a filling factory (plant) 14 operates on the sheet material 11, the caps 13 and the liquid food to provide packages containing liquid food. For example, a production line at the filling plant 14 may form the sheet material 11 into a container, fill the liquid food into the container, and seal the container to form the package. The production line may also attach a cap 13 to the container. FIG. 1B shows an example of a package 16 produced by the filling plant 14. Stage 2 may further comprise external handing 15 of packages, e.g. palletizing, before entering the distribution stage 3.

It should be understood that the manufacturing chain generally may involve many different converting plants 10, cap plants 12 and filling plants 14, which may be distributed globally. Each of the plants 10, 12, 14 may include a plurality of production lines.

As indicated in FIG. 1B, the package 16 comprises a data carrier 17 that represents a marking code. The data carrier 17 may be implemented by any known technique for providing an article of manufacture with a code. In one example, the data carrier 17 is printed onto the package 16, e.g. as sequence of human-readable symbols (e.g. characters), or a machine-readable graphical symbol such as one or more bar codes or a 2D code (DataMatrix, QR code, etc.). In another example, the data carrier is an electronic tag, in which the code is stored and made available for retrieval by wireless communication with the tag, e.g. in accordance to any conventional standard for this purpose, such as NFC, RFID, BLE, etc.

The marking code is generated to be unique to the package 16 within the entire eco-system of plants 10, 12, 14 within the manufacturing chain as exemplified in FIG. 1A, at least for a predefined lifetime. The marking code may be applied to the package in either of the plants 10, 12, 14 shown in FIG. 1A. For example, marking codes may be applied by the converting plant 10 at predefined positions on the sheet material 11 so as to be located on each of the packages 16 produced by filling plant 14. In another example, a marking code may be applied by the cap plant 12 to each cap 13. In a further example, a marking code is applied to the sheet material 11, the cap 13, the intermediate container or the package 16 by the filling plant 14. It is to be understood that the package 16 may contain more than one such unique marking code, e.g. one on the cap 13 and one on the package 16. It is also conceivable that a unique marking code is provided to the packages, or groups of packages, at the subsequent handling 15 (e.g. palletizing).

Embodiments are related to storing the marking codes and associated data in a database and will be exemplified in the following with reference to implementations of the marking code described in aforesaid EP3540664.

Specifically, the marking code comprises payload data which is unique to the production of the individual package and which is encrypted by a predefined encryption algorithm. Generally, the marking code consists of a sequence of values, for example binary values. The payload data, which is denoted package production data (PPD) in the following, may include data elements that identify the location of production and/or the time of production. In a first example, the data elements in the PPD include identifiers of the producer that operates a plant (Producer ID), the plant (Plant ID), the production line in the plant (Line ID), the equipment where the marking code is added to the package (Equipment ID), and the PPD further identifies the current time of production, for example by year, day, hour, minute, second and a sub-second resolution counter (Package Counter), which may or may not be randomized. In a second example, the data elements in the PPD include identifiers of the plant (Production Unit ID), a production batch, and a package within the production batch, where the production batch may be identified by a time period, for example current year and month, and a batch number within the time period (Request Number), and where the package may be identified by a package number within the production batch (Package Counter). The package number may or may not be randomized. The marking code may further comprise a non-encrypted header portion, which may or may not be obfuscated and may contain data enabling decryption and validation of the encrypted PPD.

An example embodiment of a system 20 which is configured for code generation, code storage and marking of packages is schematically shown in FIG. 2. The system 20 includes a PPD generator 21, a code generator 22, a marking device 23, and a storage controller 24 coupled to a database 30. The PPD generator 21 is configured to provide the package production data PPD to be included in the marking code. In one implementation ("inline implementation"), the PPD generator 21 is synchronized with the production for automated real-time generation of the PPD, for example in accordance with the first example above. In another implementation ("offline implementation"), the PPD generator 21 is operated to provide the PPD in advance of production, for example structured in accordance with the second example above. The code generator 22 is configured to generate marking codes, MC, based on the PPDs from the PPD generator 21 and provide the marking codes to the marking device 23, which is operated to apply the respective marking code to an article of manufacture, such as the sheet material 11, the cap 13 or the package 16. As understood from the foregoing, the marking device 23 may be a printer, an ablation device, or a device embedding the code into an electronic tag, which may be attached by the marking device 23 onto the article of manufacture or may be pre-attached thereto. In the inline implementation, the code generator 22 is synchronized with the production to generate the marking codes in real time. In the offline implementation, the code generator 22 may generate the marking codes either in advance of production or in synchronization with production.

The storage controller 24 is configured to receive the PPD, the marking code (MC), and possibly additional data. Based thereon, the storage controller 24 generates and stores package itemization data, PID, in the database 30. Each PID corresponds to an individual package and forms a data item for storage in the database 30. In some implementations, the data item may, e.g., be a row in a table (SQL database) or a document in a collection (NoSQL database). As understood from the foregoing, a huge volume of data items will eventually be stored in the database 30, which therefore should be scalable, and preferably horizontally scalable for resource efficiency. In one embodiment, the database 30 is a distributed database comprising a plurality of logical partitions, where each logical partition may have a predefined maximum size and is assigned a unique partition identifier (Partition ID). In a non-limiting example, the predefined maximum size is in the range of 0.1-100 GB. A database management system (DBMS) 30A for the database 30 is operated to transparently and automatically distribute the data items among the logical partitions, for example based on a "partition key" (aka "distribution key") for each data item. The storage controller 24 may provide an interface to the DBMS 30A that allows an operator to set the partition key to be used and that allows for manual or automatic upload of data items for storage in the database 30. The DBMS 30A may be proprietary to the host of the distributed database 30 and may be configured to map the logical partitions, in any suitable relation, to a plurality of nodes, which may include any one of physical servers, virtual servers or virtual LUNs (logical unit number) with access to one or more storage devices, such as hard-disk drives (HDDs) and/or solid-state drives (SSDs), for example to efficiently satisfy scalability and performance needs. As the throughput and storage requirements may increase, the DBMS 30A may move logical partitions to automatically spread the load across a greater number of servers. The DBMS 30A may be any commercially available system, and the distributed database 30 may be implemented as an SQL or a NoSQL database. In one embodiment, the DBMS 30A is a cloud computing platform. In a specific implementation, the DBMS 30A is included in Microsoft Azure Cosmos DB, which is a globally distributed, multi-model database service. In a specific example, the DBMS 30A is set up to operate as a NoSQL Document Database.

The package itemization data, PID, comprises the marking code, or a subset thereof, and at least a subset of the data elements in the PPD. The PID may also include additional data elements associated with the generation of the marking code, the production of the package or the storage in the database. In one non-limiting example, which conforms to the above-mentioned first and second examples of the PPD, the PID includes the marking code (or a subset thereof), Producer ID, Plant ID, Line ID, Equipment ID, year, day, hour, minute, second, Package Counter, Production Unit ID, and Request Number.

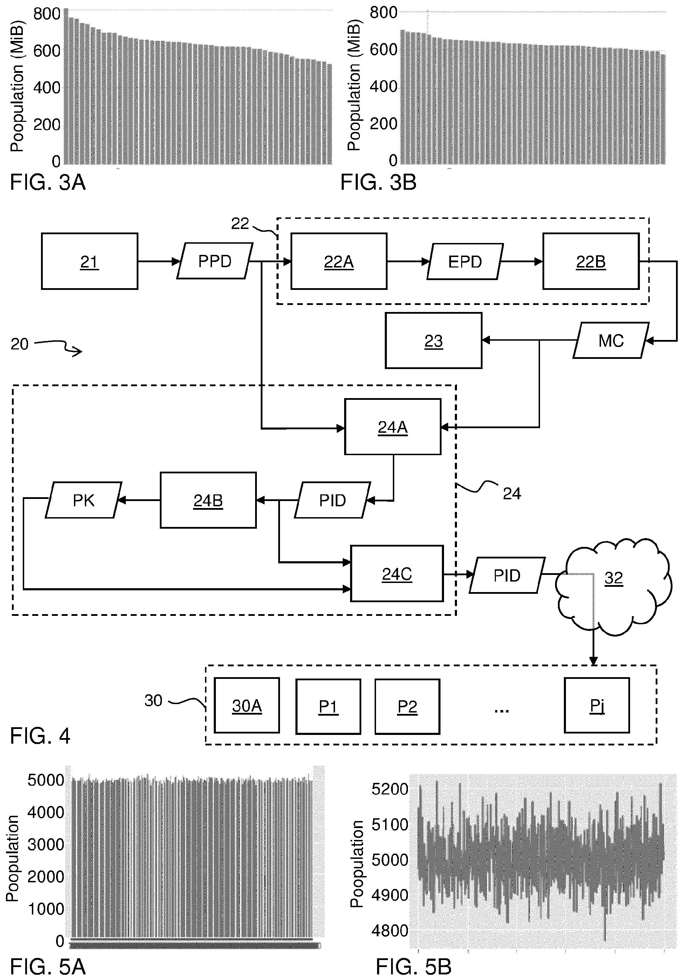

When implementing storage of the PID on the above-mentioned Microsoft Azure Cosmos DB, the present Applicant experienced poor performance, for example in terms of resource consumption and speed of search and retrieval. Further analysis of the data storage in the database 30 revealed a substantial non-uniformity in the distribution of data between partitions, also known as "skewness". FIGS 3A-3B illustrate such skewness when using Line ID as partition key. FIG. 3A is a plot of the amount of data (vertical axis) stored in each partition (horizontal axis) when the database 30 in configured with 5 000 partitions, and FIG. 3B is a corresponding plot when the database 30 in configured with 30 000 partitions. The skewness was found to at least partly cause the poor performance and was present irrespective of partition key when selected among the data elements in the PPD, for example among the data elements that indicate the location and the time of production. There are strategies to overcome skewness by generating so-called synthetic partition keys, for example by concatenating two or more data elements, by appending a random suffix to a data element, or by appending a pre-calculated suffix to a data element, where the pre-calculated suffix is a hash value of another data element. However, these strategies tend to increase complexity and may impair the performance of the database.

Surprisingly, the present Applicant found that using the marking code as partition key rendered a substantially more uniform distribution of data among the logical partitions in the distributed database. It is presently believed that the encrypted data in the marking code imparts a randomness to the marking code that manifests itself as a substantially non-skewed data distribution among the partitions in the distributed database.

FIG. 4 is a block diagram of the system 20 in FIG. 2 in accordance with an embodiment. Here, the database 30 is a distributed database comprising partitions P1, P2, ..., Pj, with j being a number significantly larger than 1, and typically at least 1 000, 5 000 or 10 000. The storage controller 24 is coupled to the database 30 over a wired and/or wireless communication network 32, for example a WAN (Wide Area Network), LAN (Local Area Network), PAN (Personal Area Network), or any combination thereof. When the database 30 is provided as a cloud-based service, the network 32 may include a WAN, such as the Internet.

Like in FIG. 2, the PPD generator 21 provides package production data, PPD, which is received by the code generator 22. The code generator 22 comprises an encryption module 22A, which is configured to operate an encryption algorithm or function on the PPD to generate encrypted package production data, EPD. Any conceivable encryption algorithm may be used, including any symmetric encryption algorithm in which a private encryption key is used for both encryption and decryption, and any asymmetric algorithm which utilizes pairs of public and private encryption keys. In one non-limiting embodiment, the encryption algorithm is a block cipher, such as Blowfish, DES, IDEA, RC5 or AES. The encryption algorithm scrambles the PPD and obliterates its structure. Generally, the encryption serves to protect the PPD, to make it difficult to guess a valid marking code based on another marking code and to minimize the risk of fraudulent generation of marking codes. The code generator 22 further comprises a code population module 22B, which is configured to form the marking code, MC, by combining the EPD and associated non-encrypted data, for example in a header portion as exemplified in EP3540664. The marking code is supplied from the code generator 22 to the marking device 23 and to the storage controller 24. The storage controller 24 comprises an aggregation module 24A, a key generating module 24B and a storage interface module 24C. The aggregation module 24A is configured to receive the marking code, MC, from the code generator 22, and the PPD from either the PPD generator 21 (as shown) or the code generator 22. The aggregation module 24A generates a data item for storage in database 30, the data item being the above-mentioned package itemization data, PID. The key generating module 24B is configured to receive the PID and generate the partition key, PK, as a function of the marking code, or the subset thereof, as included in the PID. According to the claimed invention, the module 24B sets the partition key equal to the marking code or the module 24B sets the partition key equal to the EPD of the marking code. In an example, not according to the claimed invention, the module 24B concatenates the marking code or the EPD with one or more other data elements in the PID. According to another example not according to the claimed invention, the module 24B may also operate any suitable function on the marking code or the EPD to generate the partition key. However, the latter example may require the module 24B to add the partition key to the PID before the PID is stored in the database 30, which will increase the required data storage capacity of the database 30.

The storage interface module 24C is configured to receive the partition key, PK, from the key generating module 24B and the PID from the aggregation module 24C. The storage interface module 24C, which is coupled to the database 30, is further operable to cause the DBMS 30A to select a partition among the partitions P1-Pj based on the partition key, PK, and store the PID in the selected partition. In one embodiment, the module 24C comprises a predefined mapping function which is configured to identify a selected partition, for example by the above-mentioned Partition ID. The module 24C may thus operate the mapping function on the partition key to compute a current Partition ID and provide the current Partition ID to the DBMS 30A for identification of the selected partition. In another embodiment, the mapping function is part of the DBMS 30A, which is caused to compute the current Partition ID when the module 24C supplies the partition key to the DBMS 30A. In one embodiment, the mapping function is configured to map all conceivable partition keys onto a set of unique Partition IDs, one for each partition P1-Pj. In one embodiment, the mapping function is further configured to scramble the bits of the partition key to improve the uniformity of the data distribution in the database 30. In one embodiment, the mapping function is a hash function. Any hash function may be used, including but not limited to a cryptographic hash function, a non-cryptographic hash function or a cyclic redundancy check (CRC) function. In one embodiment, the mapping function involves a modulo operation, e.g. modulo division by j or a prime number close to j. In another embodiment, the mapping function extracts a predefined number of bits in the partition key and collates the extracted bits into the Partition ID.

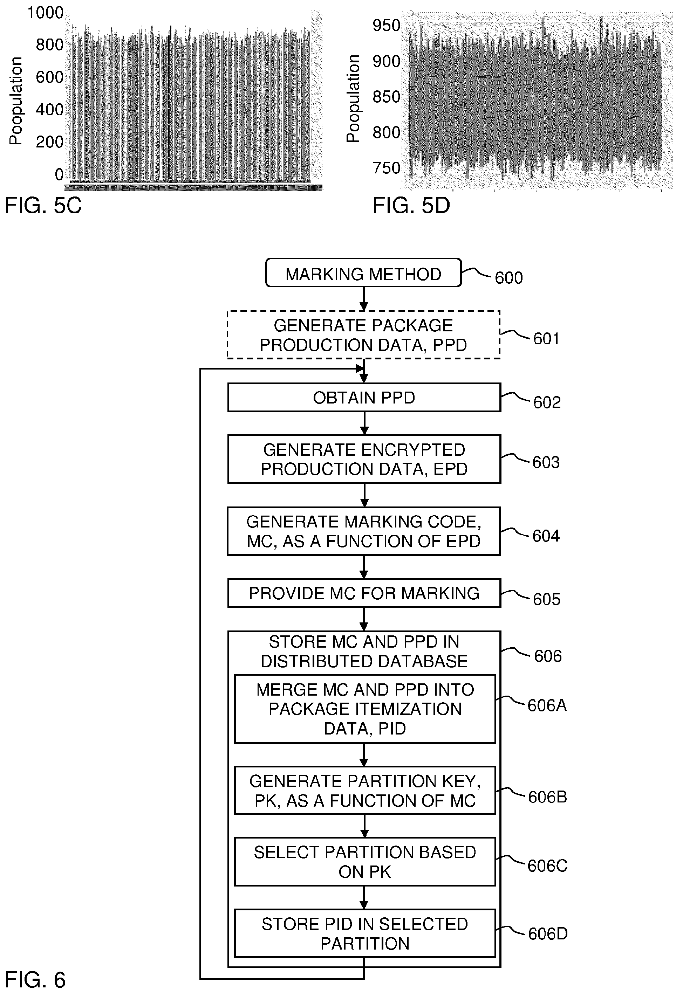

FIGS 5A-5D illustrate the data distribution in the Microsoft Azure Cosmos DB when the partition key is set to the marking code and a hash function is operated on the partition key to map it to a predefined number (j) of partitions. FIG. 5A is a plot of the amount of data (vertical axis) stored in each partition (horizontal axis) when the database 30 in configured with 1 000 partitions, and FIG. 5B is an enlarged view of FIG. 5A to show the variations between partitions in greater detail. FIGS 5C-5D correspond to FIGS 5A-5B when the database 30 in configured with 30 000 partitions. Compared to the plots in FIGS 3A-3B, data are significantly more uniformly distributed across the partitions and the skewness is essentially eliminated.

FIG. 6 is a method 600 of generating marking codes in accordance with an embodiment. The method 60 may be executed in the system 20 of FIG. 2 or FIG. 4. In step 601, which may or may not be part of the method 600, the package production data, PPD, is generated. Steps 602-606 are repeatedly performed for individual packages. Step 602-605 may be performed by the code generator 22, and step 606 may be performed by the storage controller 24. Step 602 obtains the PPD for a package. Step 603 operates the predefined encryption algorithm on the PPD to generate the encrypted package production data, EPD. Step 604 generates the marking code, MC, to include at least the EPD. Step 605 provides the marking code for marking of the package, for example by use of the marking device 23. Step 606 stores the marking code (or a subset thereof) and the PPD (or a subset thereof) in the database 30. The method 600 then proceeds to repeat steps 602-606. In the illustrated embodiment, step 606 comprises further steps 606A-606D. Step 606A generates package itemization data, PID, as a function of the marking code and the PPD, for example by merging the marking code (or a subset thereof) and at least a subset of the data elements in the PPD into a common data item. Step 606B generates the partition key, PK, as a function of the marking code. Step 606C selects a partition in the database 30 based on the partition key, and step 606D stores the PID on the selected partition.

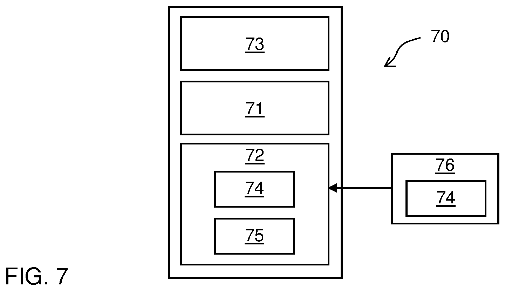

Reverting to the systems 20 in FIGS 2 and 4, the respective device 21, 22 and 24 may be implemented by hardware or a combination of software and hardware. In some embodiments, the devices 21, 22 and 24 are implemented on one or more software-controlled computing devices. FIG. 7 schematically depicts such a computing device 70, which comprises a processor 71, computer memory 72, and a communication interface 73 for input and/or output of data. The communication interface 73 may be configured for wired and/or wireless communication, including communication with the database 30. The processor 71 may e.g. include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program 74 comprising computer instructions is stored in the memory 72 and executed by the processor 71 to perform any of the operations, functions or steps exemplified in the foregoing. As indicated in FIG. 7, the memory 72 may also store control data 75 for use by the processor 72, e.g. control data for generating the partition key in step 606B, control data for the encryption in step 603, control data for the selection of partition in step 606C, etc. The control program 74 may be supplied to the computing device 70 on a computer-readable medium 76, which may be a tangible (non-transitory) product (e.g. magnetic medium, optical disk, read-only memory, flash memory, etc) or a propagating signal.

## Claims

1. A method of generating marking codes to uniquely identify packages for liquid food, said method comprising:
obtaining (602) package production data (PPD) which is unique to each individual package (16);
operating (603) a predefined encryption algorithm on the package production data (PPD) to generate encrypted package production data (EPD);
generating (604) a marking code (MC) that includes the encrypted package production data (EPD);
providing (605) the marking code (MC) for marking of the individual package (16); and
storing (606), in a database (30) that comprises a plurality of partitions (P1-Pj), package itemization data (PID) comprising at least a subset of the marking code (MC) and at least a subset of the package production data (PPD) of the individual package (16),
wherein said storing (606) comprises generating (606B) a partition key (PK) as a function of the marking code (MC), and operating a controller (24) coupled to the database (30) to determine (606C) a selected partition among the plurality of partitions (P1-Pj) based on the partition key (PK) and to store (606D) the package itemization data (PID) in the selected partition,
wherein the partition key (PK) equals to the marking code (MC), or the partition key (PK) equals the encrypted package production data (EPD) of the marking code (MC).

2. The method of claim 1, wherein said operating the controller (24) comprises operating a predefined mapping function on the partition key (PK), the predefined mapping function being configured to map partition keys (PK) to a set of partition identifiers, which comprises a respective partition identifier for each partition among the plurality of partitions (P1-Pj), wherein the selected partition is determined based on a current partition identifier generated by the mapping function for the partition key (PK).

3. The method of claim 2, wherein the predefined mapping function comprises a hash function.

4. The method of any preceding claim, wherein the predefined encryption algorithm is a block cipher.

5. The method of any preceding claim, wherein the package production data (PPD) is obtained to represent at least one of a location and a time of producing the individual package (16).

6. The method of any preceding claim, wherein said at least a subset of the marking code (MC) comprises the encrypted package production data (EPD).

7. The method of any preceding claim, wherein the database (30) is a distributed database.

8. Computer-readable medium comprising computer instructions which, when executed by a processor (71), cause the processor (71) to perform the method of any preceding claim.

9. A system for generating marking codes to uniquely identify packages for liquid food, said system comprising:
a code generator (22) configured to operate a predefined encryption algorithm on package production data (PPD), which is unique to each individual package (16), to generate encrypted package production data (EPD), said code generator (22) being further configured to generate a marking code (MC) that includes the encrypted package production data (EPD) and to provide the marking code (MC) for marking of the individual package (16)
a storage interface (24C) coupled to a database (30) that comprises a plurality of partitions (P1-Pj), the storage interface (24C) being arranged to receive package itemization data (PID) comprising at least a subset of the marking code (MC) and at least a subset of the package production data (PPD) of the individual package (16), and
a key generator (24B) configured to generate a partition key (PK) as a function of the marking code (MC) and provide the partition key (PK) to the storage interface (24C),
wherein the storage interface (24C) is configured to, upon receipt of the partition key (PK), determine a selected partition among the plurality of partitions (P1-Pj) based on the partition key (PK) and to store the package itemization data (PID) in the selected partition, wherein the partition key (PK) equals to the marking code (MC), or the partition key (PK) equals the encrypted package production data (EPD) of the marking code (MC).

## Patentansprüche

1. Verfahren zum Erzeugen von Markierungscodes zum eindeutigen Identifizieren von Verpackungen für flüssige Lebensmittel, wobei das Verfahren Folgendes umfasst:
Erhalten (602) von Verpackungsproduktionsdaten (PPD), die für jede einzelne Verpackung eindeutig sind (16);
Betreiben (603) eines vordefinierten Verschlüsselungsalgorithmus an den Verpackungsproduktionsdaten (PPD), um verschlüsselte Verpackungsproduktionsdaten (EPD) zu erzeugen;
Erzeugen (604) eines Markierungscodes (MC), der die verschlüsselten Verpackungsproduktionsdaten (EPD) beinhaltet;
Bereitstellen (605) des Markierungscodes (MC) zum Markieren der einzelnen Verpackung (16); und
Speichern (606), in einer Datenbank (30), die eine Vielzahl von Partitionen (P1-Pj) umfasst, von Verpackungsaufgliederungsdaten (PID), die mindestens eine Teilmenge des Markierungscodes (MC) und mindestens eine Teilmenge der Verpackungsproduktionsdaten (PPD) der individuellen Verpackung (16) umfassen,
wobei das Speichern (606) das Erzeugen (606B) eines Partitionsschlüssels (PK) als eine Funktion des Markierungscodes (MC) und Betreiben einer Steuerung (24), die mit der Datenbank (30) gekoppelt ist, umfasst, um eine ausgewählte Partition unter der Vielzahl von Partitionen (P1-Pj) basierend auf dem Partitionsschlüssel (PK) zu bestimmen (606C) und die Verpackungsaufgliederungsdaten (PID) in der ausgewählten Partition zu speichern (606D),
wobei der Partitionsschlüssel (PK) gleich dem Markierungscode (MC) ist oder der Partitionsschlüssel (PK) gleich den verschlüsselten Verpackungsproduktionsdaten (EPD) des Markierungscodes (MC) ist.

2. Verfahren nach Anspruch 1, wobei das Betreiben der Steuerung (24) das Betreiben einer vordefinierten Abbildungsfunktion auf dem Partitionsschlüssel (PK) umfasst, wobei die vordefinierte Abbildungsfunktion dazu ausgebildet ist, Partitionsschlüssel (PK) einem Satz von Partitionsidentifikatoren zuzuordnen, der eine jeweilige Partitionsidentifikation für jede Partition unter der Vielzahl von Partitionen (P1-Pj) umfasst, wobei die ausgewählte Partition basierend auf einer aktuellen Partitionsidentifikation bestimmt wird, die durch die Abbildungsfunktion für den Partitionsschlüssel (PK) erzeugt wird.

3. Verfahren nach Anspruch 2, wobei die vordefinierte Abbildungsfunktion eine Hash-Funktion umfasst.

4. Verfahren nach einem der vorhergehenden Ansprüche, wobei der vordefinierte Verschlüsselungsalgorithmus eine Blockverschlüsselung ist.

5. Verfahren nach einem der vorhergehenden Ansprüche, wobei die Verpackungsproduktionsdaten (PPD) erhalten werden, um einen Ort und/oder eine Zeit des Herstellens der einzelnen Verpackung (16) darzustellen.

6. Verfahren nach einem der vorhergehenden Ansprüche, wobei die mindestens eine Teilmenge des Markierungscodes (MC) die verschlüsselten Verpackungsproduktionsdaten (EPD) umfasst.

7. Verfahren nach einem der vorhergehenden Ansprüche, wobei die Datenbank (30) eine verteilte Datenbank ist.

8. Computerlesbares Medium, das Computeranweisungen enthält, die, wenn sie von einem Prozessor (71) ausgeführt werden, den Prozessor (71) veranlassen, das Verfahren nach einem der vorhergehenden Ansprüche durchzuführen.

9. System zum Erzeugen von Markierungscodes zum eindeutigen Identifizieren von Verpackungen für flüssige Lebensmittel, wobei das System Folgendes umfasst:
einen Codegenerator (22), der dazu ausgebildet ist, einen vordefinierten Verschlüsselungsalgorithmus an Verpackungsproduktionsdaten (PPD) zu betreiben, der für jede individuelle Verpackung (16) eindeutig ist, um verschlüsselte Verpackungsproduktionsdaten (EPD) zu erzeugen, wobei der Codegenerator (22) ferner dazu ausgebildet ist, einen Markierungscode (MC) zu erzeugen, der die verschlüsselten Verpackungsproduktionsdaten (EPD) beinhaltet, und den Markierungscode (MC) zum Markieren der individuellen Verpackung (16) bereitzustellen,
eine Speicherschnittstelle (24C), die mit einer Datenbank (30) gekoppelt ist, die eine Vielzahl von Partitionen (P1-Pj) umfasst, wobei die Speicherschnittstelle (24C) ausgebildet ist, um Verpackungsaufgliederungsdaten (PID) zu empfangen, die mindestens eine Teilmenge des Markierungscodes (MC) und mindestens eine Teilmenge der Verpackungsproduktionsdaten (PPD) der individuellen Verpackung (16) umfassen, und
einen Schlüsselgenerator (24B), der dazu ausgebildet ist, einen Partitionsschlüssel (PK) als eine Funktion des Markierungscodes (MC) zu erzeugen und den Partitionsschlüssel (PK) an die Speicherschnittstelle (24C) bereitzustellen,
wobei die Speicherschnittstelle (24C) so ausgebildet ist, dass sie bei Empfang des Partitionsschlüssels (PK) eine ausgewählte Partition aus der Vielzahl von Partitionen (P1-Pj) auf der Grundlage des Partitionsschlüssels (PK) bestimmt und die Verpackungsaufgliederungsdaten (PID) in der ausgewählten Partition speichert, wobei der Partitionsschlüssel (PK) gleich dem Markierungscode (MC) ist oder der Partitionsschlüssel (PK) gleich den verschlüsselten Verpackungsproduktionsdaten (EPD) des Markierungscodes (MC) ist.

## Revendications

1. Procédé de génération de codes de marquage pour identifier de manière unique des emballages pour aliments liquides, ledit procédé comportant :
l'obtention (602) de données de production d'emballage (PPD) qui sont uniques à chaque emballage individuel (16) ;
l'exploitation (603) d'un algorithme de cryptage prédéfini sur les données de production d'emballage (PPD) pour générer des données cryptées de production d'emballage (EPD) ;
la génération (604) d'un code de marquage (MC) qui comprend les données cryptées de production d'emballage (EPD) ;
la fourniture (605) du code de marquage (MC) en vue du marquage de l'emballage individuel (16) ; et
le stockage (606), dans une base de données (30) qui comporte une pluralité de partitions (P1-Pj), de données de parcellisation d'emballages (PID) comportant au moins un sous-ensemble du code de marquage (MC) et au moins un sous-ensemble des données de production d'emballage (PPD) de l'emballage individuel (16),
ledit stockage (606) comportant la génération (606B) d'une clé de partition (PK) en fonction du code de marquage (MC), et l'exploitation d'un dispositif (24) de commande couplé à la base de données (30) pour déterminer (606C) une partition sélectionnée parmi la pluralité de partitions (P1-Pj) d'après la clé de partition (PK) et pour stocker (606D) les données de parcellisation d'emballages (PID) dans la partition sélectionnée,
la clé de partition (PK) étant égale au code de marquage (MC), ou la clé de partition (PK) étant égale aux données cryptées de production d'emballage (EPD) du code de marquage (MC).

2. Procédé selon la revendication 1, ladite exploitation du dispositif (24) de commande comportant le fait de faire agir une fonction de mappage prédéfinie sur la clé de partition (PK), la fonction de mappage prédéfinie étant configurée pour associer des clés de partition (PK) à un ensemble d'identifiants de partitions, qui comprend un identifiant respectif de partition pour chaque partition parmi la pluralité de partitions (P1-Pj), la partition sélectionnée étant déterminée d'après un identifiant actuel de partition généré par la fonction de mappage pour la clé de partition (PK).

3. Procédé selon la revendication 2, la fonction de mappage prédéfinie comportant une fonction de hachage.

4. Procédé selon l'une quelconque des revendications précédentes, l'algorithme de cryptage prédéfini étant unchiffrement par blocs.

5. Procédé selon l'une quelconque des revendications précédentes, les données de production d'emballage (PPD) étant obtenues pour représenter un lieu et/ou une heure de production de l'emballage individuel (16).

6. Procédé selon l'une quelconque des revendications précédentes, ledit ou lesdits sous-ensembles du code de marquage (MC) comportant les données cryptées de production d'emballage (EPD).

7. Procédé selon l'une quelconque des revendications précédentes, la base de données (30) étant une base de données répartie.

8. Support lisible par ordinateur comportant des instructions informatiques qui, lorsqu'elles sont exécutées par un processeur (71), amènent le processeur (71) à réaliser le procédé selon l'une quelconque des revendications précédentes.

9. Système de génération de codes de marquage pour identifier de manière unique des emballages pour aliments liquides, ledit système comportant :
un générateur (22) de code configuré pour exploiter un algorithme de cryptage prédéfini sur des données de production d'emballage (PPD), qui sont uniques à chaque emballage individuel (16), pour générer des données cryptées de production d'emballage (EPD), ledit générateur (22) de code étant en outre configuré pour générer un code de marquage (MC) qui comprend les données cryptées de production d'emballage (EPD) et pour fournir le code de marquage (MC) en vue du marquage de l'emballage individuel (16),
une interface (24C) de stockage couplée à une base de données (30) qui comporte une pluralité de partitions (P1-Pj), l'interface (24C) de stockage étant agencée pour recevoir des données de parcellisation d'emballages (PID) comportant au moins un sous-ensemble du code de marquage (MC) et au moins un sous-ensemble des données de production d'emballage (PPD) de l'emballage individuel (16), et
un générateur (24B) de clés configuré pour générer une clé de partition (PK) en fonction du code de marquage (MC) et fournir la clé de partition (PK) à l'interface (24C) de stockage,
l'interface (24C) de stockage étant configurée pour, à réception de la clé de partition (PK), déterminer une partition sélectionnée parmi la pluralité de partitions (P1-Pj) d'après la clé de partition (PK) et pour stocker les données de parcellisation d'emballages (PID) dans la partition sélectionnée, la clé de partition (PK) étant égale au code de marquage (MC), ou la clé de partition (PK) étant égale aux données cryptées de production d'emballage (EPD) du code de marquage (MC).
